**Europäisches Patentamt**

**European Patent Office**

**Office européen des brevets**

(11) Veröffentlichungsnummer: **0 224 468**
**A1**

(12) **EUROPÄISCHE PATENTANMELDUNG**

(21) Anmeldenummer: 86890311.3

(22) Anmeldetag: 12.11.86

(51) Int. Cl.⁴: **F 03 B 13/00**
**A 01 G 25/09**

(30) Priorität: 12.11.85 AT 3287/85

(43) Veröffentlichungstag der Anmeldung:
03.06.87 Patentblatt 87/23

(84) Benannte Vertragsstaaten:
BE CH DE ES FR GB GR IT LI LU NL SE

(71) Anmelder: Waldhauser, Kurt
Grazerstrasse 60
A-8061 St. Radegund bei Graz(AT)

(72) Erfinder: Waldhauser, Kurt
Grazerstrasse 60
A-8061 St. Radegund bei Graz(AT)

(74) Vertreter: Barger, Erich et al,
Patentanwälte Dipl.-Ing. Erich Barger Dipl.-Ing. Hermann
Krick Biberstrasse 15
A-1010 Wien(AT)

(54) Ein- und Auslaufsteuerung für Turbinen von Trommelberegnungsgeräten mittels Bypass.

(57) Ein- und Auslaufsteuerung für Turbinen von Trommelberegnungsgeräten mittels Bypass, wobei der Einlaufquerschnitt (14) im Turbinenschaufelbereich (18) seiner Größe nach veränderlich ist und daß bei Verkleinerung dieses Einlaufquerschnittes unter eine bestimmte Größe eine Bypass-Öffnung (16), die außerhalb des Laufradkranzes direkt in den Turbinenauslauf (7) mündet, nach und nach freigegeben wird.

Fig 3

./...

EP 0 224 468 A1

Fig. 4

Schnitt A-B

Ein- und Auslaufsteuerung für Turbinen von
Trommelberegnungsgeräten mittels Bypass

Die Erfindung betrifft eine Ein- und Auslaufsteuerung für Turbinen von Trommelberegnungsgeräten
mittels Bypass.

Bei Trommelberegnungsgeräten, die mit Turbinen
den Einzug des Beregnungsrohres durchführen, ist die
Steuerung der dazu notwendigen Kraft in den einzelnen
Beregnungsphasen problematisch. Ursache dafür ist
unter anderem, daß stark unterschiedliche Düsendurchmesser in Abhängigkeit von den Niederschlags- und
Grundwasserverhältnissen sowie zur Anpassung an die
verschiedenen zu beregnenden Kulturen zum Einsatz kommen
und die von der Turbine aufzubringenden Einzugskräfte
von einem Maximalwert bei vollständig ausgefahrenem
Beregnungsrohr bis auf praktisch Null bei aufgewickeltem
Bewegungsrohr absinken, wodurch die Turbine einen großen
Leistungsbereich abdecken muß.

Die Schluckleistung einer gegebenen Turbine ist nur
in einem gewissen relativ engen Arbeitsbereich mit einem
guten Wirkungsgrad möglich. Mit anderen Worten: Die
durch die Turbine fließende Wassermenge kann nicht
wesentlich erhöht oder gesenkt werden, ohne gravierende
Wirkungsgradverluste in Kauf nehmen zu müssen.

Gemäß dem Stand der Technik werden Turbinen der
eingangs erwähnten Art mittels Bypass-Leitungen gesteuert,
die das dem Beregnungsgerät zugeführte Wasser, das wegen
des momentanen Arbeitspunktes der Turbine überschüssig
ist, mittels einer Drossel (Ventil) auf den Druck des
Turbinenauslaufes bringen. Die dazu verwendeten Bypass-
Leitungen sind aufwendig und verursachen mit ihren zahlreichen Krümmern und der zusätzlichen Rohrreibung unerwünschte Druckverluste. Darüberhinaus ist es ein Hauptmangel des Bypasses gemäß dem Stand der Technik, daß
die in der Drosselstelle abgebaute Druckenergie zur
Antriebsleistung der Turbine nichts beiträgt.

Die Erfindung hat es sich zum Ziel gemacht, eine
Steuerung der eingangs erwähnten Art anzugeben, die die
genannten Nachteile nicht aufweist und die auf einfache
und strömungsgünstige Art und Weise sowohl die Schluckleistung der Turbine und deren Kraftentnahme aus dem
Antriebswasser an den unterschiedlichen Kraftbedarf
anzupassen erlaubt.

Dies geschieht erfindungsgemäß dadurch, daß der
Einlaufquerschnitt im Turbinenschaufelbereich seiner
Größe nach veränderlich ist und daß bei Verkleinerung
dieses Einlaufquerschnittes unter eine bestimmte Größe
eine Bypass-Öffnung, die außerhalb des Laufradkranzes
direkt in den Turbinenauslauf mündet, nach und nach
verschlossen wird.

In einer Ausgestaltung ist die Bypass-Öffnung
am Ende des Absaugvorhofes der Turbine vorgesehen,
wodurch die vom Injektor abgesaugte Wasserströmung
durch die Schrägstellung der Turbinenschaufeln in diesen
Bereich zum Antrieb beiträgt. Dabei wird der Aus- und
Einlaufkanal der Bypass-Öffnung als Injektor ausgebildet,
so daß die durch den Bypass geleitete Wassermenge einerseits durch Injektorwirkung ein Absaugen des Wassers
aus dem Schaufelbereich und damit einen Zusatzantrieb
liefert, anderseits die kinetische Energie des durch
den Bypass strömenden Wassers in bestmöglicher Weise
in Druckenergie umwandelt.

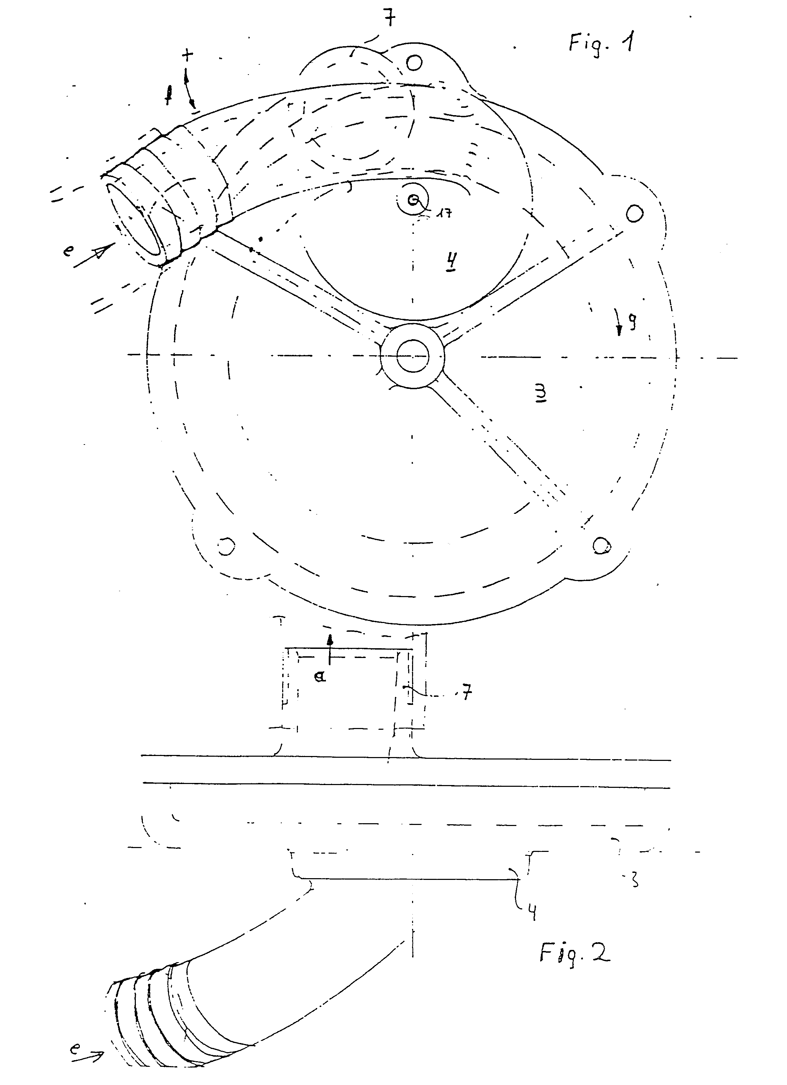

Die Erfindung wird an Hand der Zeichnungen näher
beschrieben. Dabei zeigt Fig. 1 eine Frontansicht,

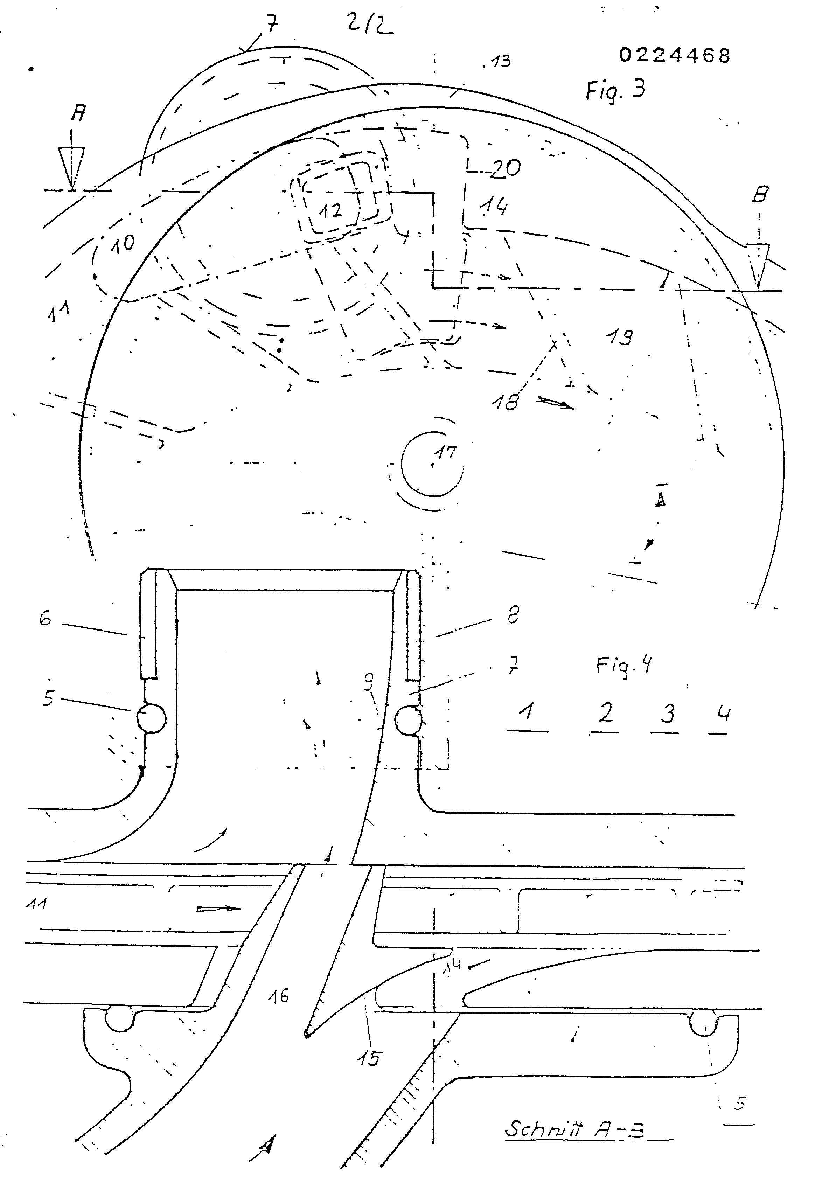

Fig. 2 eine Draufsicht, Fig. 3 einen Schnitt durch eine
erfindungsgemäße Turbine im Bereich des Ein- und Auslaufes
und Fig. 4 einen Schnitt A-B von Fig. 3.

Die Turbine besteht aus einer scheibenförmigen Rückwand 1, die einen rechtwinkelig abstehenden Auslaufstutzen 7 aufweist , einem Deckel 3, der die Läuferlagerung und Befestigungsvorrichtungen für eine Ein- und Auslaufsteuerkulisse 4 aufweist, sowie dem Turbinenläufer 18 und der ihn tragenden Turbinenwelle.

Das Beregnungswasser tritt durch den Einlaufkanal, dessen Querschnitt 14 durch die jeweilige Stellung der Ein- und Auslaufsteuerkulisse bestimmt wird, in das Turbinengehäuse 1 und wird je nach der Steuerstellung teilweise durch/den Einlaufdruck und teilweise durch den Injektorsog durch den Auslaufstutzen 7 mit integriertem Injektor ausgebracht.

Vorteilhafterweise ist die Turbine mit ihrer Rückwand 1 an das Montageblech des Regengerätes so montiert, daß der Auslaufstutzen 7 als Mittelanspeisung in die Trommelachse ragt und diese lagert und abdichtet.

Die Steuerung erfolgt durch die Ein- und Auslaufkulisse 4, die über eine Achse 17 verdrehbar am Turbinendeckel 3 angeordnet ist. Die Funktionsweise der Steuerung ist folgende: Beim Verdrehen der Ein- und Auslaufkulisse 4, was während der Beregnung durch ein nicht dargestelltes Getriebe in Abhängigkeit von dem bereits aufgerollten Beregnungsrohr geschieht, ist zu Beginn der Arbeit bei völlig ausgelegtem Beregnungsrohr die Bypass-Leitung bzw. -Öffnung 16 geschlossen und das einströmende Wasser wird im Anströmkanal maximal beschleunigt. Die Turbine gibt somit die maximal mögliche Leistung bei größtem Druckabbau ab. Dieser Zustand wird insbesondere bei geringen durchströmenden Wassermengen (kleine verwendete Düsen) und hoher Einzugsgeschwindigkeit des Beregnungsgerätes (z.B. bei der Saataufgangsberegnung) benötigt.

Bei der Verdrehung der Ein-Auslaufkulisse (Pfeil F in Richtung "-" in Fig. 1) wird sukzessive der Einlaufquerschnitt 14 erweitert, wodurch die Turbine an Drehzahl verliert und entsprechend weniger Druckenergie dem Wasser entnimmt, so daß bei gleichbleibendem Eingangsdruck der Turbinenausgangsdruck steigt. Dies ist notwendig, um die Drehzahl der Turbine für einen gleichmäßigen Einzug des Gerätes zurückzunehmen, da sich die zur Einziehung des Gerätes notwendigen Kräfte bis zum Ende des Einzuges auf fast Null verringern und sich der Durchmesser des Beregnungsrohrwickels auf der Trommel des Gerätes vergrößert.

Beim Durchsatz größerer Wassermengen (größere Düsen, langsame Einzugsgeschwindigkeit) wird die Ein-Auslaufkulisse 4 noch innerhalb des Beregnungsvorganges mechanisch weiter in der Richtung "-" des Pfeiles F Fig. 1 verdreht, so daß sich schließlich eine Öffnung 16 im Bereich der Bypass-Leitung bildet, wobei die Turbine jedoch überraschenderweise keinen Kraftverlust erleidet, da die Saugwirkung in dem als Injektor ausgebildeten Auslaufstutzen 7 dies kompensiert. Beim endgültigen Stillsetzen der Turbine, d.h. wenn das Beregnungsrohr voll aufgewickelt ist und das Beregnungsgerät seine Endposition erreicht hat, ist die Bypass-Leitung vollständig geöffnet, wodurch nurmehr ein geringer Wasserstrom durch das Turbinengehäuse fließt, der nicht mehr in der Lage ist, das Beregnungsgerät weiter zu bewegen. Es ermöglicht die Erfindung somit, Turbinen einer mittleren Schluckleistung sowohl für wesentlich kleinere als auch größere Wassermengen als bisher üblich bei zufriedenstellenden Wirkungsgraden zu verwenden. Darüberhinaus erreicht man den Vorteil, dieses Ziel durch eine äußerst einfache robuste und zuverlässige Konstruktion zu erreichen, die im Vergleich zum Stand der Technik auf eine Reihe unerwünschter Bauteile, wie Rohre, Krümmer und Drosselschieber verzichtet.

Die Vergrößerung des Querschnittes 14 der Einlaufströmung kann auf verschiedene Weise erfolgen und es hängt vom Typ und der Größe des Gerätes ab, bei welcher Größe des Querschnittes 14 sich die Bypass-Leitung 16 öffnet. In Kenntnis der Erfindung ist es für den Fachmann ein leichtes, diese Parameter zu bestimmen bzw. an die jeweiligen Einsatzbedingungen anzupassen. Es ist auch nicht zwingend notwendig, den Einlaufstutzen mit der Kulisse 4 gemeinsam zu bewegen, es ist beispielsweise möglich, ein Einlaufgehäuse am Turbinendeckel 3 fix zu befestigen und eine im Einlaufgehäuse befindliche Steuerscheibe so zu verschieben oder zu verdrehen, daß die Querschnitte 14,16 in gewünschter Weise vergrößert oder verkleinert werden.

Die Ausbildung des Stutzens 8 als Injektor ist in Fig. 4 als Injektorfläche 9 ersichtlich. Verzichtet man auf diese Ausbildung, hat man gegenüber dem Stand der Technik immer noch/die Vorteile der vereinfachten und zuverlässigeren Konstruktion und einer verbesserten Strömungsführung, ohne allerdings die Wirkungsgrade bei Verwendung eines Injektors zu erreichen.

Ähnliches gilt für eine Strahlrichtfläche 15 im Bereich des Einströmkanales mit dem veränderlichen Querschnitt 14, die so ausgelegt ist, daß die Einströmrichtung in Abhängigkeit von der Stellung der Kulisse 4 an die jeweils in die Turbine eintretenden Wassermengen angepaßt ist.

In der Zeichnung sind die Abdichtungen der einzelnen Teile mittels O-Ringen 5 gezeigt, doch ist es selbstverständlich möglich, andere Dichtungen zu verwenden. Wenn entgegen dem Ausführungsbeispiel der Auslaufstutzen 8 nicht direkt als Einlauf für die Achse der Beregnungsrohrtrommel dient, ist es nicht notwendig, das Gleitlager 6 vorzusehen.

Es soll abschließend nochmals darauf hingewiesen werden, daß die Bypass-Öffnung bzw. -Verbindung 12,16 außerhalb des Bereiches des Turbinenschaufelkranzes 18 liegen muß, um eine Störung der Strömung im Bereich des Laufkranzes zu vermeiden. Wie im Ausführungsbeispiel dargestellt, liegt dieser von der Kulisse freizugebender

-6-

Einströmquerschnitt 12 in den Auslaufstutzen 7 am
besten am Ende des Absaugvorhofes 11, da dann das
durch den Bypass strömende Wasser die günstigste
Wirkung auf das aus der Turbine austretende Wasser
ausüben kann.

Patentansprüche:

1. Ein- und Auslaufsteuerung für Turbinen von Trommelberegnungsgeräten mittels Bypass, dadurch gekennzeichnet, daß der Einlaufquerschnitt (14) im Turbinenschaufelbereich (18) seiner Größe nach veränderlich ist und daß bei Verkleinerung dieses Einlaufquerschnittes unter eine bestimmte Größe eine Bypass-Öffnung (16), die außerhalb des Laufradkranzes direkt in den Turbinenauslauf (7) mündet, nach und nach verschlossen wird.

2. Steuerung nach Anspruch 1, dadurch gekennzeichnet, daß die Änderung der Größe des Einlaufquerschnittes (14) und der Bypass-Öffnung (16) durch Verschieben oder Verdrehen einer Steuerkulisse (4) erfolgt.

3. Steuerung nach Anspruch 2, dadurch gekennzeichnet, daß die Steuerkulisse (4) im Bereich des Einlaufquerschnittes (14) eine Strahlrichtfläche (15) aufweist, die in Abhängigkeit von der Stellung der Steuerkulisse eine Änderung des Einströmwinkels des Einlaufes bewirkt.

4. Steuerung nach einem der Ansprüche 1 bis 3, dadurch gekennzeichnet, daß der Turbinenauslauf (7) als Injektor ausgebildet ist, in dem eine Innenwand (9) einen in Strömungsrichtung zunehmenden Strömungsquerschnitt zur Verfügung stellt.

5. Steuerung nach einem der Ansprüche 1 bis 4, dadurch gekennzeichnet, daß die Bypass-Öffnung (16) im, in Strömungsrichtung gesehen, letzten Teil des Absaugvorhofes (11) mündet.

6. Steuerung nach Anspruch 4 oder 5, dadurch gekennzeichnet, daß die Bypass-Öffnung (16) im Bereich des durch die Innenwand (9) gebildeten Injektors in den Turbinenauslauf (7) mündet.

112

0224468

Fig. 1

Fig. 2

0224468

Fig. 3

Fig. 4

Schnitt A-B

**Europäisches Patentamt**

## EUROPÄISCHER RECHERCHENBERICHT

Nummer der Anmeldung

EP 86 89 0311

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| A | AT-A- 364 566 (MINICHMAYR) * Seite 3, Zeile 26 - Seite 4, Zeile 6 * | 1 | F 03 B 13/00 A 01 G 25/09 |
| | --- | | |
| A | FR-A-2 485 331 (IRRIFRANCE) * Seite 3, Zeile 18 - Seite 7, Zeile 4 * | 1,2 | |
| | ----- | | |

**RECHERCHIERTE SACHGEBIETE (Int. Cl 4)**

F 03 B
A 01 G

Der vorliegende Recherchenbericht wurde für alle Patentansprüche erstellt.

| Recherchenort | Abschlußdatum der Recherche | Prüfer |
|---|---|---|
| DEN HAAG | 27-02-1987 | DE WINTER P.E.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82